(19) **Europäisches Patentamt**

**European Patent Office**

**Office européen des brevets**

(11) **EP 1 162 762 A2**

(12) **EUROPÄISCHE PATENTANMELDUNG**

(43) Veröffentlichungstag:
**12.12.2001 Patentblatt 2001/50**

(51) Int Cl.7: **H04B 7/08**

(21) Anmeldenummer: **01112653.9**

(22) Anmeldetag: **25.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.06.2000 DE 10027610**

(71) Anmelder: **FUBA Automotive GmbH
31162 Bad Salzdetfurth (DE)**

(72) Erfinder: **Roy, Alexander
38166 Braunschweig (DE)**

(54) **Verfahren zum Diversity-Empfang von digitalen Fernsehsignalen**

(57) Zur einfachen Realisierung eines Diversity-empfangs von digitalen Femsehsignalen nach dem DVB-T Standard nach Art eines MRC-Diversity (Maximum Ratio Combining) wird vorgeschlagen, in jedem Empfangszweig ein Softdecision-Informationen führendes Signal abzugreifen und diese abgegriffenen Signale gewichtet zusammenzufassen, wobei das zusammengefasste Signal wiederum Softdecision-Informationen enthält und der weiteren Signalverarbeitung zugrundegelegt wird. Die genannten Signale der einzelnen Empfangszweige können an den Ausgängen eines Demappers bzw eines Symbol-/Bit-Deinterleaver abgegriffen werden und es kann die Zusammenfassung und Gewichtung unter Verwendung eines Speicherbausteins (15) durchgeführt werden, in dem die die Gewichtung und die Zusammenfassung beschreibende mathematische Funktion in der Form einer Nachschlagtabelle abgelegt ist. Die Zusammenfassung der Signale der einzelnen Empfangszweige sowie der Zugriff auf diese kann vorgenommen werden, ohne dass vorab zu berechnende Zusatzinformationen wie z. B. betreffend eine Verstärkung oder eine Phasenkorrektur erforderlich sind.

Fig. 3

**Beschreibung**

Die Erfindung bezieht sich auf ein Verfahren zum Diversityempfang von digitalen Fernsehsignalen entsprechend dem Oberbegriff des Anspruchs 1. Sie bezieht sich ferner auf ein Verfah-ren zum Empfang von digitalen Fernsehsignalen nach dem Oberbegriff des Anspruchs 8.

Das Prinzip des Diversityempfangs als Mittel beispielsweise zum Ausgleich von Schwunderscheinungen (Fading) ist grundsätzlich bekannt. Hierbei wird ein Signal gleichzeitig auf mehreren Wegen oder Arten empfangen.

Im Fall von Raumdiversity werden mehrere, um einige Wellenlängen versetzte Antennen benutzt, wobei die erzielte Wirkung darauf aufbaut, dass Schwunderscheinungen kaum gleichzeitig an mehreren etwas voneinander entfernten Orten auftreten. Das Signal wird gleichzeitig von zwei oder mehreren Antennen empfangen, deren jede einen Empfangszweig speist, in dem die weitere Decodierung stattfindet. Bei der Decodierung wird eine Aussage darüber gewonnen, welche Antenne das qualitativ bessere Signal liefert, wobei das decodierte Signal dieses Empfangszweiges dargestellt wird. Dieses Prinzip ist darüber hinaus in der Form von Polarisations- und Frequenzdiversity bekannt.

Eine Signalauswahl kann mit Hilfe von Mehrfachempfängern erfolgen, wobei an jedem Empfängerausgang geprüft wird, welcher Empfangskanal das zur Zeit qualitativ beste Signal führt und es wird das Signal dieses ausgewählten Empfangskanals decodiert und dargestellt. Gemeinsam ist diesen Verfahren, dass die jeweils nicht dargestellten Signale verworfen werden.

Bei einer anderen Variante des Diversityempfangs hingegen werden die qualitativ schlechteren Signale nicht verworfen, sondern es werden sämtliche Signale zusammengefasst dargestellt. Das zu empfangende Signal wird gleichzeitig über zwei oder mehr Antennen empfangen, deren jede einen Empfangszweig speist, in dem die Signalverarbeitung der weiteren Decodierungsstufen erfolgt. An einer bestimmten Stelle in der Kette der Decodierungsstufen wird das jeweilige Signal bewertet, ggf. verstärkt und in der Phase korrigiert, wobei die derart behandelten Einzelsignale anschließend aufaddiert und als zusammengefasstes Signal weiter verarbeitet werden. Es ist bekannt, dass diese letztgenannte, auch als MRC-Diversity ( Maximum Ratio Combining) bekannte Variante gegenüber der erstgenannten, auch als Selection-Diversity bekannten Variante zu qualitativ besseren Ergebnissen führt. Allerdings ist mit der Berechnung der erforderlichen Parameter zur Verstärkung und zur Phasenkorrektur der Einzelsignale ein beträchtlicher Aufwand verbunden.

Darüber hinaus sind auch Kombinationen von Selection-Diversity und MRC-Diversity bekannt.

Diese Diversity-Verfahren sind beim UKW-Hörrundfunk und beim Mobilempfang von analogen Fernsehen bereits im Einsatz. Zahlreiche europäische und außereuropäische Länder haben sich inzwischen für die Einführung des digitalen terrestrischen Fernsehens als Nachfol-gesystem für das bisherige analoge Fernsehen entschieden und es ist dieses System als DVB-T (Digital Video Broadcasting-Terrestrial) Standard als europäische Norm beim European Telecommunications Standards Institute (ETSI) unter EN 300744 im Jahre 1997 standardisiert worden. Ein zu DVB-T technisch verwandtes System ist unter dem Namen ISDB-T (Integrated Services Digital Broadcasting-Terrestrial) in Japan entwickelt worden, welches sich in nur wenigen Details von DVB-T unterscheidet.

Obwohl die Eignung von DVB-T Signalen insbesondere für den mobilen Empfang in einem Fahrzeug ebenso bekannt ist wie die sich aus der Anwendung von Diversity-Verfahren unter diesen Empfangsbedingungen ergebenden Vorteile, sind einschlägige, mobil einsetzbare Fernsehempfangsgeräte für Diversity-Empfang von DVB-T Signalen zur Zeit noch nicht kommerziell verfügbar.

Es ist die Aufgabe der Erfindung ein Verfahren der eingangs bezeichneten Art zu ent-werfen, welches auf den mobilen Diversity-Empfang von digitalen Fernsehsignalen, insbesondere von Signalen nach dem DVB-T- Standard gerichtet ist. Es ist ferner die Aufgabe der Erfindung, ein Verfahren für den mobilen Empfangs von digitalen Fernsehsignalen, insbesondere von Signalen nach dem DVB-T Standard zu entwerfen, bei welchem die qualitativen Vorzüge des MRC-Diversity gegenüber anderen Diversity-Varianten gegeben sind, wobei jedoch der Aufwand zur Implementierung dieser Technik in einen entsprechend ausgestalteten Empfänger im Vergleich zu dem bekann-ten, oben dargelegten Stand der Technik geringer gehalten werden kann. Gelöst ist diese Aufgabe bei einem solchem Verfahren entsprechend dem Oberbegriff des Anspruchs 1 durch die Merkmale des Kennzeichnungsteils dieses Anspruchs.

Erfindungswesentlich ist hiernach, dass das vom mobilen analogen Hörrundfunk sowie Fernsehrundfunk her grundsätzlich bekannte Diversity-Prinzip, hier in der Form des Selection-Diversity auf den Empfang von Daten des digitalen Fernsehens angewandt wird. Ausgangspunkt sind beispielsweise mehrere Empfangszweige, denen jeweils eine Antenne zugeordnet ist bzw. im einfachsten Fall zwei Empfangszweige mit jeweils einer Antenne. Im Regelfall wird jedoch von m Empfangszweigen und n Antennen ausge-gangen, wobei n = m gilt. Jeder Empfangszweig kann beispielsweise einen Tuner und die zur digitalen Verarbeitung, insbesondere zur Decodierung, zur Fehlerkorrektur usw bestimmten Funktionselemente aufweisen. Erfindungsgemäß wird nunmehr an wenigstens einem Punkt der Signalverarbeitungskette eines jeden Empfangszweiges, beginnend beispielsweise mit dem Tuner ein die aktuelle Empfangsqualität beschreiben-des Steuersignal abgeleitet, welches mit den entsprechenden Steuersignalen der anderen Empfangszweige verglichen wird, wobei dieser Vergleich den Ausgangspunkt für die Entscheidung einer eventuellen Umschaltung auf einen anderen, eine aktuell bessere Empfangsqualität führenden Empfangszweig bildet. Beim Empfang mittels eines in diesem Sinne ausgerüsteten Empfängers werden nur die Signale eines durchgeschalteten Empfangszweiges für den Benutzer dargestellt. Die Überprüfung der Empfangsqualitäten der übrigen Empfangszweige sowie der Vergleich der ermittelten Steuersignale erfolgen kontinuierlich, so dass für den Benutzer stets die aktuell bestmögliche Empfangsqualität zur Verfügung gestellt ist.

Erfindungsgemäß sind gemäß den Merkmalen des Anspruchs 2 die Empfangszweige zur Umsetzung von digitalen Fernsehsignalen nach dem DVB-T Standard eingerichtet. Die Tauglichkeit von DVB-T Signalen für den mobilen Empfang in einem Fahrzeug ist bekannt, wobei infolge der Anwendung dieses Prinzips für den Diversity-Empfang, beispielsweise nach Art eines Antennendiversity auch schwierigen, durch Abschattungen und Fading gekennzeichneten Empfangsbedingungen Rechnung getragen werden kann.

Die Merkmale der Ansprüche 3 und 4 sind auf die Gewinnung der zur Beschreibung der Empfangsqualität eines Empfangszweiges bestimmten Steuersignale gerichtet. Diese können hiernach wahlweise im Bereich des Tuners oder der sonstigen Signalverarbei-tungskette abgegriffen werden, und zwar bis zur ausgangsseitigen Gewinnung eines MPEG Transport Strom Signals.

Es kann in jedem Empfangskanal an geeigneter Stelle ein Steuersignal abgezweigt werden. Entsprechend den Merkmalen des Anspruchs 5 besteht auch die Möglichkeit, die aktuelle Empfangsqualität eines Empfangszweiges durch mehrere, an unterschied-lichen Stellen der Signalverarbeitungskette abgezweigte Steuersignale zu beschreiben, so dass die Bewertung der aktuellen Empfangsqualität eines Empfangszweiges auf der Auswertung mehrerer Steuersignale beruht. Die auf dieser Bewertung beruhende Aussage wird anschließend dem Qualitätsvergleich mit den übrigen Enpfangszweigen zugrundegelegt.

Entsprechend den Merkmalen des Anspruchs 6 kann dieses Verfahren grundsätzlich auch beim Empfang digitaler Fernsehsignale nach dem japanischen ISDB-T Standard benutzt werden.

Gelöst ist die eingangs dargelegte Aufgabe bei einem MRC-Diversity Verfahren entsprechend dem Oberbegriff des Anspruchs 8 durch die Merkmale des Kennzeichnungsteils dieses Anspruchs.

Erfindungswesentlich ist hiernach, dass für die Zusammenfassung von Signalen der einzelnen Empfangszweige zwecks Bildung eines zusammengefassten, durch eine höhere Empfangsqualität als diejenige des einzelnen Empfangskanals gekennzeichne-ten Signals solche Signale eines Empfangszweiges benutzt werden, die Softdecision-Informationen führen. Dies führt zur Bildung eines zusammengefassten Signals, welches wiederum Softdecision-Infomationen führt, deren Softdecision-Wahrscheinlichkeit jedoch einen höheren Wert als diejenige der Ausgangssignale der einzelnen Empfangszweige aufweist. Dieses zusammengefaßte, somit eine erhöhte Zuverlässigkeit aufweisende Signal wird der weiteren Verarbeitung innerhalb einer Verarbeitungskette zugrundegelegt. Dadurch, dass der Zusammenfassung Signale mit Softdecision-Informationen zugrundegelegt werden, kann mit einem vergleichsweise ge-ringen Aufwand ein MRC-Diversity-System eingerichtet werden, welches anerkannter-maßen gegenüber Selection-Diversity-Verfahren zu qualitativ besseren Ergebnissen führt. Insbesondere kann auf diese Weise ein MRC-Diversity-System für dem mobilen Empfang eingerichtet werden, bei welchem sich bei der Zusammenfassung von Signalen der einzelnen Empfangszweige Zusatzinformationen über Verstärkungen, Phasenkorrek-turen und sonstige für die Kombination der Signale ansonsten erforderliche Berechnungen erübrigen. Der mit dem Zugriff auf die Signale der einzelnen Empfangszweige sowie deren Zusammenfassung verbundene Schaltungsaufwand kann in jedem Fall gering gehalten werden.

Besonders vorteilhaft kann dieses Verfahren entsprechend den Merkmalen des Anspruchs 9 beim Empfang digitaler Fernsehsignale nach dem DVB-T Standard benutzt werden.

Die Kombination der jeweils Softdecision-Informationen führenden Signale muß nach Maßgabe der folgenden Prinzipien angelegt werden. Es darf eine sehr zuverlässige Soft-decision-Aussage eines Empfangszweiges mit einer Softdecision-Wahrscheinlichkeit nahe zu dem Wert 1,0 nicht durch unzuverlässigere Aussagen anderer Empfangszweige negativ beeinflusst werden. Mehrere Softdecision-Aussagen aus verschiedenen Em-pfangszweigen mit jeweils mittlerer Zuverlässigkeit müssen in dem zusammengefassten Signal zu einer Gesamtaussage mit einer im Vergleich zu den einzelnen Empfangszwei-en höheren Zuverlässigkeit führen. Hoch zuverlässige, aber komplementäre Aussagen aus verschiedenen Empfangszweigen müssen zu einer resultierenden bzw zusammengesetzten Softdecision-Wahrscheinlichkeit von 0,5 führen. Um diesen weiteren Anforderungen gerecht zu werden, ist entsprechend den Merkmalen der Ansprüche 10 bis 14 vorgesehen, die Zusammenfassung der Werte der Softdecision-Wahrscheinlichkeiten der einzelnen Empfangszweige nach Maßgabe einer, durch eine mathematische Funktion definierten Gewichtung vorzunehmen. Besonders vorteilhaft kann diese Zusammenfassung unter Zugrundelegung einer in einem flüchtigen oder nicht flüchtigen Speicher abgelegten Nachschlagetabelle vorgenommen werden, durch welche diese mathematische Funktion definiert wird. Diese Vorgehensweise bietet sich an, nachdem die Werte der Softdecision-Wahrscheinlichkeiten der einzelnen Em-fangskanäle ohnehin quantisiert, beispielsweise in einem 4 Bit Format vorliegen,

In den Ansprüchen 15,16 sind die Punkte einer Signalverarbeitungskette nach dem DVB-T Standard bezeichnet, an denen Softdecision-Informationen führende Signale zwecks anschließender gewichteter Zusammenfassung abgegriffen werden können.

Angewandt werden kann diese Verfahrensvariante eines MRC-Diversity entsprechend den Merkmalen des Anspruchs 17 gleichermaßen auch beim Empfang digitaler Signale nach dem japanischen ISDB-T Standard.

Die Erfindung wird im Folgenden unter Bezugnahme auf die nachfolgenden Zeichnungen näher erläutert werden. Es zeigen:

Fig. 1 ein vereinfachtes, an sich bekanntes Blockdiagramm eines Empfangszweiges für DVB-T Signale;

Fig. 2 eine lediglich beispielhafte graphische Darstellung der erfindungsgemäßen Softdecision-Wahrscheinlichkeit für eine logische Eins als gewichtete Kombination der Softdecision-Wahrscheinlichkeiten zweier Empfangszweige;

Fig.3 ein vereinfachtes Blockschaltbild eines erfindungsgemäßen MRC-Diversity-Verfahrens unter Zugrundelegung einer Zusammenfassung von zwei Empfangszweigen;

Fig.4 ein vereinfachtes Blockschaltbild eines erfindungsgemäßen Selection-Diversity-Verfahrens unter Zugrundelegung von zwei Empfangszweigen.

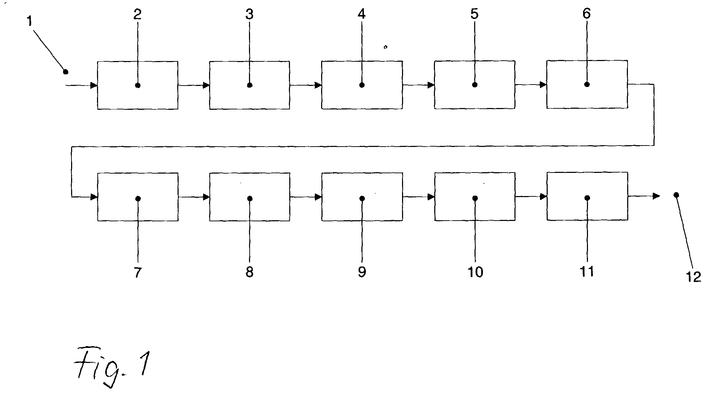

Dem in Fig.1 gezeigten Bockschaltbild ist an der Stelle 1 ein zeichnerisch nicht wieder-gegebener Tuner nebst einer Antenne vorgeordnet, dessen analoges ZF-Signal das Eingangssignal dieses Schaltbildes darstellt. Das Gesamtsystem, bestehend aus der Antenne, dem Tuner und den zeichnerisch dargestellten Funktionsblöcken bildet einen, zum Umsetzung von DVB-T-Signalen bestimmten, in seiner Wirkungsweise an sich bekannten Empfangszweig. Im Einzelnen handelt es sich um einen Analog-Digital-Wandler 2, einen Baustein Zeitrahmen und Synchronisation 3, einen Funktionsblock FFT 4 (Fast Fourier Transform), einen Baustein Kanalschätzung und Kanalkorrektur 5, einen Baustein Demapping 6, einen Baustein Symbol-/Bit-Deinterleaver 7, einen Baustein Viterbi-Decoder 8, einen Baustein äußerer Deinterleaver 9, einen Reed-Solomon Decoder 10 und einen Baustein Energieverwischung und Synchron-Invertierung 11. An der Stelle 12 steht schließlich ein decodiertes, fehlerkorrigiertes Ausgangssignal im MPEG Standard an, welches in an sich bekannter Weise weiter umgesetzt wird, worauf hier nicht näher eingegangen werden soll.

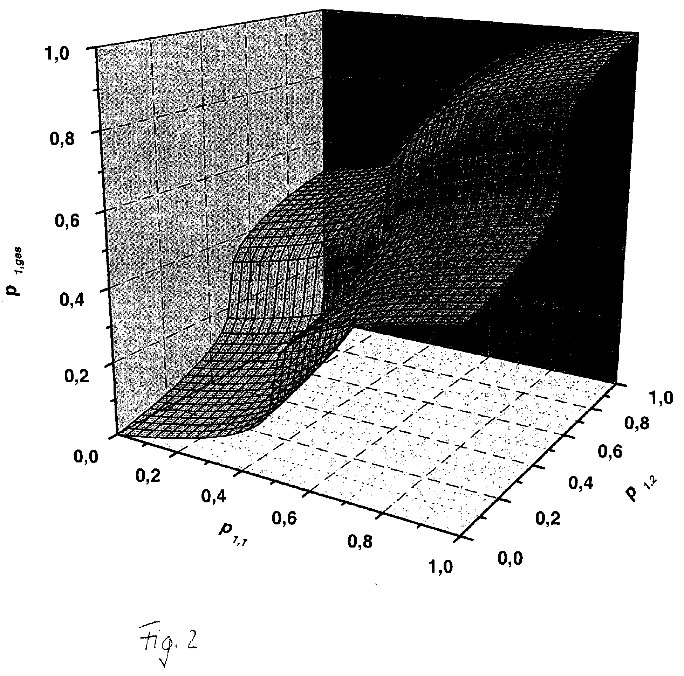

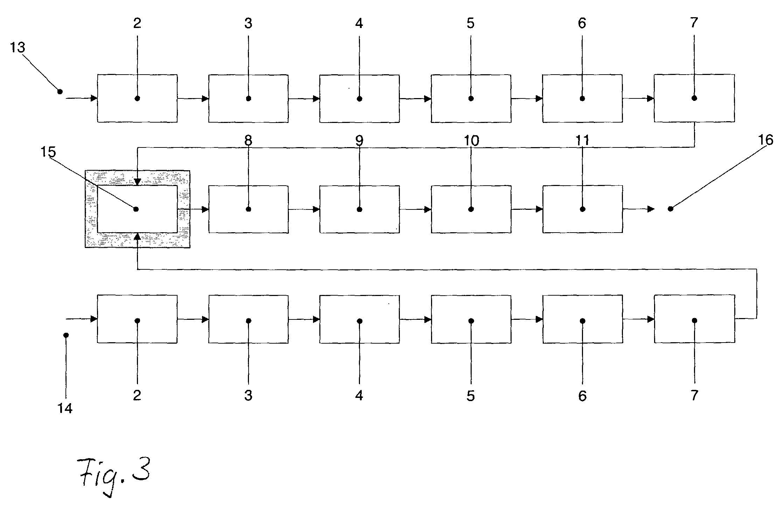

Zur erfindungsgemäßen Realisierung einer Diversity Funktion beim Empfang von DVB-T Signalen im Sinne einer MRC-Diversity werden nunmehr die Signale von mehreren Empfangszweigen zusammengefasst und es wird im Folgenden auf die zeichnerischen Darstellungen der Figuren 2 und 3 Bezug genommen, in denen Funktionselemente, die mit denjenigen der Fig. 1 übereinstimmen, entsprechend beziffert sind, so dass auf eine diesbezügliche, wiederholte Beschreibung verzichtet werden kann.

Im Einzelnen zeigt Fig. 3 lediglich beispielhaft zwei untereinander gleich beschaffene Empfangszweige, die eingangsseitig an den Stellen 13, 14 mit dem ZF-Signal zeichnerisch nicht dargestellter Tuner beaufschlagt werden, denen wiederum unterschiedliche Antennen zugeordnet werden. Erfindungsgemäß werden nunmehr die Aus-gangssignale der Bausteine Symbol-/Bit-Deinterleaver 7 der beiden Empfangszweige zusammengefasst und zwar unter Verwendung z.B. eines Speicherbausteins 15.

Erfindungswesentlich ist, dass Signale mit Softdecision-Informationen zusammengefasst werden, somit Signale, die eine quantifizierte Aussage hinsichtlich ihrer Zuverlässigkeit bzw einer kontinuierlichen Wahrscheinlichkeit dahingehend enthalten, ob eine empfangene Informationseinheit dem Wert logisch Eins oder dem Wert logisch Null entspricht. Signale mit Softdecision-Informationen stehen an den Ausgängen der Bausteine Demapping 6 und Symbol-/Bit-Deinterleaver 7 an und können gleichermaßen für eine Zusammenfassung im Sinne einer MRC-Diversity Verfahrens herangezogen werden. Das Ziel besteht in jedem Fall darin, Softdecision-Aussagen mehrerer Empfangszweige, denen einzeln jeweils lediglich mittlere Zuverlässigkeiten zukommen, zu einer Aussage zusammenzufassen, die eine im Vergleich zu dem einzelnen Empfangszweig höhere Zuverlässigkeit aufweist. Die sich aus der Zusammen-fassung ergebende Aussage ist wiederum eine Softdecision-Aussage, die anschließend wie bei dem an sich bekannten, in Fig. 1 gezeigten Empfangszweig einer Fehlerkorrektur unterworfen wird, deren erster Baustein der Viterbi-Decoder 8 ist. In jedem Fall ergibt sich an der Stelle 16 ein im Verhältnis zu einem einzelnen Empfangszweig qualitativ verbessertes Ausgangssignal im MPEG-Standard.

Komplementäre, hoch zuverlässige Aussagen aus verschiedenen Empfangszweigen sollten zu einem resultierenden Softdecision-Ausgangswert von 0,5 führen.

Vor diesem Hintergrund ist es ferner erfindungswesentlich, dass die Zusammenfassung der Einzelsignale der mehreren, hier beiden Empfangszweige unter Zugrundelegung einer mathematisch darstellbaren Gewichtung erfolgt, wobei beispielhaft eine Gewich-tung mit Hilfe der Funktion einer Wurzel höheren ungeraden Grades vorgeschlagen wird. Dies könnte in nachstehender, in der Graphik gemäß Fig.2 beispielhaft für den Fall von zwei Empfangszweigen und der Benutzung einer Wurzel dritten Grades gezeigten Weise geschehen:

$$P_{1,ges} = \frac{1}{2} + \frac{1}{2N} \cdot \sum_{i=1}^{N} \cdot \sqrt[m]{2 \cdot \left(P_{1,i} - \frac{1}{2}\right)} \qquad (1)$$

$$P_{0,i} = 1 - P_{1,i} \qquad (2)$$

$$P_{0,ges} = 1 - P_{1,ges} \qquad (3)$$

wobei die folgenden Definitionen gelten:

i Laufvariable
m ungerade natürliche Zahl, m = (3,5,7, ...)
N Gesamtzahl der Empfangszweige
$p_{1,i}$ Softdecision-Wahrscheinlichkeit für eine logische Eins im Empfangszweig i
$p_{0,i}$ Softdecision-Wahrscheinlichkeit für eine logische Null im Empfangszweig i
$p_{1,ges}$ Softdecision-Wahrscheinlichkeit für eine logische Eins als gewichtete Kombination der Softdecision-Aussagen aller N Empfangszweige
$p_{0,ges}$ Softdecision-Wahrscheinlichkeit für eine logische Null als gewichtete Kombination der Softdecision-Aussagen aller N Empfangszweige

Graphisch dargestellt in Fig.2 ist die sich aus dem Term gemäß (1) ergebende funktio-nale Abhängigkeit zwischen der Softdecision-Wahrscheinlichkeit $p_{1,ges}$ des sich aus der gewichteten Zusammenfassung der Signale zweier Empfangszweige und den Soft-decision-Wahrscheinlichkeiten $p_{1,1}$ sowie $p_{1,2}$ der einzelnen Empfangskanäle, jeweils bezüglich einer logischen Eins.

Da die Werte der Softdecision-Wahrscheinlichkeiten der einzelnen Empfangszweige im Regelfall in quantisierter Form, z. B. in einem 4 Bit-Format vorliegen, können die Terme (1) - (3) als Nachschlagtabelle in einem beispielsweise nicht flüchtigen Speicher realisiert werden.

Der besondere Vorteil des oben vorgeschlagenen Lösungsweges besteht darin, dass eine Zusammenfassung der Signale der Empfangszweige im Sinne einer MRC-Diversity möglich ist, ohne dass Aussagen über eine Verstärkung, eine Phasenkorrektur oder weitere Regelgrößen erforderlich sind. Der zusätzliche Schaltungsaufwand ist auf einen Speicherbaustein 15 geringer Größe beschränkt. So wird beispielsweise bei zwei Empfangszweigen und einer Quantisierung der Softdecision-Wahrscheinlichkeiten nach Maßgabe von 4 Bit ein Speicher von 1024 Bit benötigt.

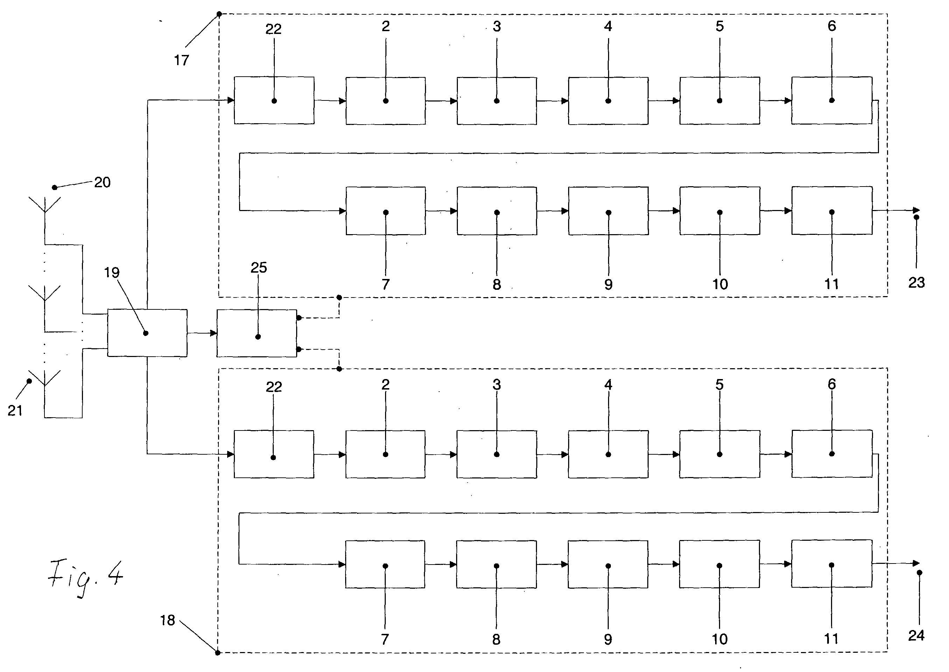

Fig. 4 zeigt ein Beispiel eines Selection-Diversity-Verfahrens zum Empfang von DVB-T Signalen nach Art einer Antennen-Diversity.

Dargestellt sind zwei Empfangskanäle 17,18, die über eine Schalteinheit 19 mit n Antennen 20,21 in Verbindung stehen. Jeder der beiden, durch gestrichelte Linien umgrenzten Empfangskanäle 17,18 umfasst einen Tuner 22, dessen ausgangsseitiges ZF-Signal in an sich bekannter, in Fig. 1 bereits gezeigter Weise verarbeitet wird, wobei ausgangsseitig, dass heißt an den Stellen 23,24 decodierte und fehlerkorrigierte Signale im MPEG Standard anstehen. Der Aufbau der Empfangszweige entspricht im übrigen demjenigen gemäß Fig. 1, so dass auf eine diesbezügliche Beschreibung verzichtet werden kann. Zweckmäßigerweise wird dieses Prinzip auf mehr als zwei Empfangszweige und mehr als zwei Antennen erweitert, und zwar auf m Empfangszweige sowie n Antennen, wobei n = m gilt.

Mit 25 ist eine Kontrolleinheit bezeichnet, durch welche die Schalteinheit 19 gesteuert wird, und zwar in Abhängigkeit von den Empfangszweigen 17,18 entnommenen, einen Leistungs- bzw einen Qualitätsparameter beschreibenden Steuersignalen. Die Kontrolleinheit 25 ist somit dahingehend eingerichtet, dass anhand von diesen, die Empfangsqualität der beiden Empfangszweige beschreibenden Steuersignale ein Tuner 22 mit einer der Antennen verbunden wird, deren Empfangsqualität aktuell die relativ beste ist, wohingegen der frei gewordene Empfangskanal zum Aufsuchen einer Antenne mit einer gegebenenfalls noch besseren Empfangsqualität benutzt wird.

Sobald eine Antenne mit einer besseren Empfangsqualität aufgefunden worden ist, erfolgt mittels der Kontrolleinheit ein Umschalten des Ausgangssignal (hier: 23 oder 24) auf den Empfangszweig mit der besseren Empfangsqualität, wohingegen unter Verwendung der frei gewordenen Empfangszweige die Suche nach einer Antenne mit einer besseren Empfangsqualität fortgesetzt wird.

Das bereits genannte, die Empfangsqualität beschreibende , den Empfangs-zweigen entnommene Steuersignal kann an zahlreichen Stellen der Signalverarbeitungskette entnommen werden. Insbesondere seien beispielhaft genannt:

- der Wert einer AGC (Automatic Gain Control) der Tuner,
- der Wert einer weiteren, dem Analog-Digital-Wandler vorgeschalteten AGC,
- der Wert einer AFC (Automatic Frequency Control),
- der über den Analog-Digital-Wandler 2 ermittelte Mittelwert eines Eingangssignals,
- der Lock-Zustand der Zeitrahmensynchronisation 3 für die FFT;
- die Detektion oder die ausbleibende Detektion des Synchronisier-Symbols der in bestimmten sogenannten Pilotsymbolen des DVB-T Signals vorhandenen TPS-Daten,
- die Prüfsumme der in bestimmten sogenannten Pilotsymbolen des DVB-T Signals vorhandenen TPS-Daten,
- der Wert, bzw der gemittelte Wert der Softdecision-Symbole am Ausgang des Bausteins Demapping 6,
- der Wert, bzw der gemittelte Wert der Softdecision-Symbole am Ausgang des Bausteins Symbol-/Bit-Deinterleaver 7,
- der Lock-Zustand des Bausteins Viterbi-Decoder 8,
- die Metrik des Bausteins Viterbi-Decoder 8,
- die Anzahl der über den Baustein Viterbi-Decoder 8 in einer bestimmten Zeit korrigierten Bits,
- die über den Baustein Viterbi-Decoder 8 geschätzte oder errechnete Bitfehlerrate,
- der Lock-Zustand des Bausteins äußerer Deinterleaver 9,
- die Anzahl der in einer bestimmten Zeit korrekt oder fehlerhaft detektierten Synchronisiersymbole in dem Baustein äußerer Deinterleaver 9,
- der Lock-Zustand des Bausteins Reed-Solomon-Decoder 10,
- die Anzahl der über den Baustein Reed-Solomon-Decoder 10 korrigierten Bytes,
- die Anzahl der in einer bestimmten Zeit als fehlerhaft detektierten MPEG TS Pakete am Ausgang 23, 24 des Empfangszweiges.

Sämtliche dieser Parameter können einzeln oder auch in beliebigen Kombinationen zur Feststellung der aktuellen Empfangsqualität einer Antenne bzw eines Empfangszweiges benutzt werden.

Beide oben skizzierten Varianten des Erfindungsgegenstands können mit besonderem Vorteil beim mobilen Empfang digitaler Fernsehsignale nach dem DVB-T Standard verwendet werden. Beide Techniken können gleichermaßen jedoch auch zum Empfang von Signalen des japanischen ISDB-T-Systems zur terrestrischen Übertragung von digitalen Fernsehsignalen benutzt werden, insbesondere unter mobilen Empfangsbedingungen n einem Fahrzeug. Beide Verfahren lassen sich zur weiteren Leistungssteigerung kombinieren.

**Patentansprüche**

1. Verfahren zum Diversity-Empfang von Fernsehsignalen mit mehreren Empfangs-zweigen (17,18) und mehreren Antennen (20,21) nach Art eines Selection-Diversity, wobei in Abhängigkeit von der aufgrund der Verbindung eines Empfangszweiges mit einer Antenne feststellbaren Empfangsqualität eine Umschaltung auf eine andere, eine bessere Empfangsqualität aufweisende Antenne vorgenommen wird, **dadurch gekennzeichnet, dass** beim Empfang von Signalen des digitalen Fernsehens in jedem Empfangszweig an wenigstens einer Stelle der Signalverarbeitung ein die Empfangsqualität des jeweiligen Empfangszweiges beschreibendes Steuersignal gebildet wird, dass die Steuersignale der Empfangszweige miteinander verglichen werden und auf der Basis dieses Vergleiches die Umschaltung vorgenommen wird.

2. Verfahren nach Anspruch 1, **gekennzeichnet durch** eine Anwendung beim Empfang digitaler Fernsehsignale nach dem DVB-T Standard.

3. Verfahren nach Anspruch 1 oder 2, **dadurch gekennzeichnet, dass** das/die Steuersig-nalle eines Empfangszweiges im Bereich eines Tuners (22) gebildet wird/werden.

4. Verfahren nach Anspruch 1 oder 2, **dadurch gekennzeichnet, dass** das/die Steuersig-nal/e eines Empfangszweiges (17,18) zwischen einem eingangsseitigen Analog-Digital-Wandler (2) und einem, durch ein MPEG Signal gebildeten Ausgang des Empfangszweiges gebildet wird/werden.

5. Verfahren nach einem der vorangegangenen Ansprüche 1 bis 4, dadurch gekenn-zeichnet, dass mehrere Steuersignale an unterschiedlichen Stellen der Signalverar-beitung entlang eines Empfangszweiges (17,18) gebildet, zwecks Bewertung der aktuellen Empfangsbedingungen ausgewertet und mit den entsprechenden Steuer-signalen der anderen Empfangszweige verglichen werden.

6. Verfahren nach Anspruch 1, **gekennzeichnet durch** eine Anwendung beim Empfang digitaler Fernsehsignale nach dem ISDB-T Standard.

7. Verfahren nach einem der vorangegangenen Ansprüche 1 bis 6, dadurch gekenn-zeichnet, dass n Antennen m Empfangszweige zugeordnet werden, wobei die n An-tennen über eine Schalteinheit (19) mit den m Empfangszweigen mit der Maßgabe zusammengeschaltet werden, das jeweils lediglich das qualitativ beste, aus der Ver-bindung eines Empfangszweiges mit einer Antenne gewonnene Signal dargestellt wird und wobei gilt n = m.

8. Verfahren zum Diversity-Empfang von digitalen Fernsehsignalen mit mehreren Empfangs-zweigen und mehreren Antennen nach Art eines MRC-Diversity (Maximum Ratio Combining), wobei die Signale eines jeden, mit einer Antenne versehenen Em-pfangszweiges zusammengefasst und ein zusamengefasstes Signal weiterverarbeitet wird, **dadurch gekennzeichnet, dass** innerhalb jedes Empfangszweiges zur Zusammenfassung mit Signalen anderer Empfangszweige nur solche Signale benutzt werden, die Softdecision-Informationen führen, dass diese Softdecision-Informationen führenden Signale zusammengefasst werden und dass das zusammengefasste, eine höhere Softdecision-Wahrscheinlichkeit als die einzelnen Signale der Empfangszweige führende Signal der weiteren Verarbeitung zugrundegelegt wird.

9. Verfahren nach Anspruch 8, **gekennzeichnet durch** seine Anwendung beim Empfang digitaler Fernsehsignale nach dem DVB-T Standard.

10. Verfahren nach Anspruch 8 oder 9, **dadurch gekennzeichnet, dass** die Zusammen-fassung der Signale der einzelnen Empfangszweige nach Maßgabe einer Gewich-tung erfolgt.

11. Verfahren nach Anspruch 10, **dadurch gekennzeichnet, dass** die Gewichtung und Zusammenfassung unter Zugrundelegung einer stetigen mathematischen Funktion erfolgt.

12. Verfahren nach Anspruch 10, **dadurch gekennzeichnet, dass** die Gewichtung und Zusammenfassung nach Maßgabe einer unstetigen mathematischen Funktion erfolgt.

13. Verfahren nach Anspruch 10, **dadurch gekennzeichnet, dass** die Gewichtung und Zusammenfassung nach Maßgabe einer intervallweise stetigen mathematischen Funktion erfolgt.

14. Verfahren nach Anspruch 10, **dadurch gekennzeichnet, dass** die Gewichtung und Zusammenfassung technisch mittels einer Nachschlagetabelle realisiert wird, die in einem Speicher abgelegt ist, wobei die Nachschlagetabelle die Abtastwerte der die Gewichtung und Zusammenfassung beschreibenden mathematischen Funktion enthält.

15. Verfahren nach einem der Ansprüche 9 bis 14, **dadurch gekennzeichnet, dass** die, jeweils Softdecision-Informationen führenden, zur Zusammenfassung bestimmten Signale der einzelnen Empfangszweige den Ausgangssignalen des Demapper entnommen werden.

16. Verfahren nach einem der Ansprüche 9 bis 14, **dadurch gekennzeichnet, dass** die, jeweils Softdecision-Informationen führenden, zur Zusammenfassung bestimmten Signale der einzelnen Empfangszweige den Ausgangssignalen des Symbol-/Bit-Deinterleaver entnommen werden.

17. Verfahren nach Anspruch 8, **gekennzeichnet durch** seine Anwendung beim Empfang digitaler Signale nach dem ISDB-T Standard.

Fig. 1

Fig. 2

Fig. 3

EP 1 162 762 A2

Fig. 4